# EUROPEAN PATENT APPLICATION

(11) **EP 3 428 039 A2**
(43) Date of publication of application: **16.01.2019**
(21) Application number: 18173272.8
(22) Date of filing: 18.05.2018
(51) Int. Cl.: B62B 5/00, B62B 5/04, B62B 3/06, B66F 9/075

(54) **FORKLIFT**

(30) Priority: 19.05.2017 CN 201710357590; 19.05.2017 CN 201710356045; 19.05.2017 CN 201720567564 U; 31.08.2017 CN 201721111021 U; 19.10.2017 CN 201721347507 U
(71) Applicant: Ningbo Ruyi Joint Stock Company, Ltd., 315600 Ninghai Zhejiang (CN)
(72) Inventor: Pan, Zhenyu, Ninghai, Zhejiang 315600 (CN); Tian, Feng, Ninghai, Zhejiang 315600 (CN); Feng, Zhenli, Ninghai, Zhejiang 315600 (CN); Yang, Zefeng, Ninghai, Zhejiang 315600 (CN); Chen, Ji, Ninghai, Zhejiang 315600 (CN); Fang, Haoxiang, Ninghai, Zhejiang 315600 (CN)
(74) Representative: Dennemeyer & Associates S.A.

(57) **Abstract**

The present invention discloses a forklift, the forklift comprises a frame mechanism (1), a pallet fork mechanism (2), a power supply unit (100), a driving mechanism, a brake mechanism, and a lifting mechanism (500) which controls the pallet fork mechanism (2) to move upward or downward; the driving mechanism is an integrated hub motor (3) which and integrates a driving motor, a tire and a hub; the hub motor (3) comprises a rotor (31), a stator (32) and a connecting shaft (34). In the present invention, a rubber layer is coated on the peripheral wall of the rotor, which makes the hub and the rubber layer undetachable and is characterized by compact structure and large bearing capacity. Meanwhile, the wear resistance, damping performance, noise reduction and the like of the rubber layer satisfy the requirements on the service life of the motor. The cost of directly coating the rubber layer on the periphery of the rotor is lower than the cost of separately providing a wheel, and it is more suitable for economical and small electric pallet trucks.

## Description

### Field of the Invention

The present invention relates to the technical field of handling tools, and in particular to a forklift.

### Description of the Prior Art

Pallet trucks, belonging to forklifts, are material handling apparatuses for carrying cargo. At present, the most common pallet trucks are manually-manipulated hydraulic pallet trucks. Since a hydraulic device is provided between a pallet fork and a wheel, it may be convenient to push a carrier below a pallet. Subsequently, the pallet fork is raised by the hydraulic pressure to lift up the cargo, so that the cargo may be dragged and moved conveniently. After the cargo arrives at the destination, the pallet fork is lifted down, and the cargo falls onto the ground, so that it may be convenient to pull the carrier out. In a conventional pallet truck, the lifting-up and lifting-down of the cargo are realized by a manually-manipulated hydraulic system, and the handling operation is completed manually. Therefore, the pallet truck becomes the most convenient, effective and common loading/unloading and handling tool among the pallet transportation tools.

In the field of electric pallet trucks, the motor is generally a driving wheel having a large torque and a large load driving capacity. For example, Chinese Patent No. CN201310738138.7 has disclosed an electrically-driven pallet truck and an electrically-driven wheel thereof, wherein the pallet truck uses down-horizontal driving wheels which are rotated by gears, and the wheels and the motor are mounted detachably. However, such driving wheel is complicated in mechanism, high in manufacture cost and high in maintenance cost.

### Summary of the Invention

A first technical problem to be solved in the present invention is to provide a forklift which is high in carrying capacity and simple in mechanism and has integrated wheels and motor.

To solve the technical problem, the forklift, comprises a frame mechanism, a pallet fork mechanism disposed on the frame mechanism, a power supply unit, a driving mechanism, a brake mechanism, and a lifting mechanism which is disposed on the frame mechanism and controls the pallet fork mechanism to move upward or downward, characterized in that, the driving mechanism is an integrated hub motor which is rotatably disposed on the frame mechanism and integrates a driving motor, a tire and a hub; the hub motor comprises a rotor and a connecting shaft with two ends which is connected to the rotor and can rotate relative to the rotor, each end of the connecting shaft extends outside the rotor and is connected to the frame mechanism.

In order to realize the rotation of forklift when being driven by the hub motor, preferably, the hub motor further comprises a stator, which is connected to the connecting shaft; the connecting shaft is penetrated through a middle part of the rotor in an axial direction and fixedly mounted on a wheel carrier of the frame mechanism; the rotor is able to rotate about the connecting shaft; and, a hub of the hub motor is formed on a peripheral wall of the rotor.

In order to improve the layout compactness and ensure the carrying capacity of the hub motor, preferably, the rotor has a chamber within which both the connecting shaft and the stator are accommodated; and, a bottom cover is provided on one side of the rotor, while an end cover adapted to the chamber is disposed on the other side of the rotor.

More preferably, shaft holes convenient for the rotation of the connecting shaft are formed on both the end cover and the bottom cover, and a bearing adapted to the shaft holes is further sheathed on the connecting shaft.

In order to satisfy the requirements on the wear resistance, damping performance and noise reduction during the operation of the motor and the integration of the hub with the motor, preferably, a rubber layer is coated on the peripheral wall of the rotor, and the rubber layer forms a tire for the hub motor.

In order to ensure the braking of the vehicle, preferably, the brake mechanism is a disc brake mechanism disposed on the hub motor, the disc brake mechanism comprises a brake disc and a brake, and at least one brake is correspondingly mounted on the brake disc.

In order to ensure the braking effect, preferably, the disc brake mechanism is disposed on one side or both sides of the hub motor.

In order to realize the switchover between the braking and the operation of the hub motor, preferably, the brake comprises a fixed friction plate, a moving friction plate, an electromagnet and a buffer portion; the fixed friction plate, the moving friction plate, the electromagnet and the buffer portion are successively disposed outward in an axial direction of the hub motor; and, an outer periphery of the brake disc is located between the fixed friction plate and the moving friction plate.

In order to eliminate the influence of the frame on the braking force of the brake during the braking, preferably, the buffer portion comprises a buffer support and a first elastic member; a mounting screw successively passes through the first elastic member and the buffer support and fixes the buffer portion on the electromagnet; and the buffer portion is fixed on the wheel carrier of the frame mechanism via screws.

Specifically, a second elastic member is further disposed on the brake, and in the braked state of the forklift, the second elastic member tends to make the moving friction plate close to the fixed friction plate and compress the brake disc; and, the electromagnet adsorbs the moving friction plate in the driving state of the forklift so as to increase a gap between the fixed friction plate and the moving friction plate and rotate the brake disc.

In order to realize the lifting-up or lifting-down of the pallet fork mechanism of the forklift, preferably, the lifting mechanism comprises a pump mechanism, an oil cylinder and an oil tank disposed on a periphery of the oil cylinder; a plunger for lifting the pallet fork mechanism up or down is disposed in the oil cylinder; the oil cylinder and the pump mechanism are assembled to form an integrated piece and are detachably disposed on a mounting base above the wheel carrier in the frame mechanism; the top of the plunger is inserted into a mounting hole on a top cover in the frame mechanism; the oil tank is communicated with an oil return pipe, and a high-pressure chamber is communicated with an oil inlet pipe; a first one-way valve for allowing hydraulic oil to flow in a single direction from the oil tank to the high-pressure chamber is disposed on a pipe in front of the high-pressure chamber; a communicating pipe is connected between the oil return pipe and the oil inlet pipe; a lowering valve set for controlling the connection or disconnection of the oil return pipe and the oil inlet pipe is disposed on the communicating pipe, and a sealing valve rod is further disposed within the communication pipe; when the pallet fork mechanism of the forklift is in an ascending state, the pump mechanism is able to eject the hydraulic oil in the oil tank into the high-pressure chamber so as to lift up the plunger; and, when the pallet fork mechanism of the forklift is in a descending state, the lowering valve set is cooperated with the sealing valve rod to communicate the oil return pipe with the oil inlet pipe so that the hydraulic oil in the high-pressure chamber flows back to the oil tank so as to lift down the plunger.

In order to ensure the descending of the pallet fork mechanism of the forklift, preferably, the sealing valve rod and the lowering valve set are disposed in opposite to each other, and an ejector rod in the lowering valve set is resisted against and cooperated with the sealing valve rod, so that the lowering valve set and the sealing valve rod are opened simultaneously to complete a descending action of the pallet fork mechanism.

Further, the pump mechanism is an electric pump mechanism and/or a manual pump mechanism.

Specifically, the pump mechanism is an electric pump mechanism, and the electric pump mechanism comprises a lifting motor, a gear pump and a contactor; the lifting motor is disposed on the gear pump and in driving connection to the gear pump; the contactor is electrically connected to the lifting motor; the gear pump is communicated with the oil tank through an oil suction pipe, and the gear pump is communicated with the high-pressure chamber successively through an oil outlet pipe and the oil inlet pipe; and, the first one-way valve is disposed on the oil outlet pipe.

Further, an overload protection pipe is further communicated at an outlet of the oil outlet pipe; the overload protection pipe is communicated with an overload oil return pipe through a safety valve; and, the overload oil return pipe is communicated with the oil return pipe so as to connect the oil tank.

Specifically, the pump mechanism is a manual pump mechanism, and the manual pump mechanism comprises a pump cylinder and a pump core; the pump core is accommodated within the pump cylinder and does a reciprocating linear motion within the pump cylinder; the pump cylinder is communicated with a middle section of the communicating pipe through a manual oil inlet pipe; a second one-way valve for controlling the hydraulic oil to flow to the high-pressure chamber in a single direction through the oil return pipe and the oil inlet pipe is disposed at a junction of the communicating pipe with the manual oil inlet pipe; and, the pump cylinder is communicated with the oil tank successively through the manual oil inlet pipe, the second one-way valve, the communicating pipe, the lowering valve set and the oil return pipe, and the pump cylinder is also communicated with the high-pressure chamber successively through the manual oil inlet pipe, the communicating pipe, the first one-way valve and the oil inlet pipe, so as to realize an oil suction and compression function.

Further, the manual oil inlet pipe is also communicated with the overload oil return pipe, a safety valve is disposed between the manual oil inlet pipe and the overload oil return pipe, and the overload oil return pipe is connected to the oil tank through the oil return pipe.

In order to conveniently realize the electrical connection of the power supply unit and a power consumer, preferably, an insertion slot is formed on the frame mechanism, a controller is disposed on the bottom of the insertion slot, and the power supply unit is detachably inserted into the insertion slot and electrically connected to the hub motor and the controller, respectively.

In order to ensure that the power supply unit is fixed within the insertion slot without shaking, preferably, the controller is disposed on the bottom of the insertion slot through a housing adapted to the controller; a limiting gap adapted to the housing and used for limiting the left-and-right movement of the power supply unit is formed on a shell of the power supply unit; a plug convenient for wiring is further disposed on the shell of the power supply unit; and, a handle for ease of operation by an operator is disposed on a top surface of the shell of the power supply unit.

In order to realize the operation of the high-torque hub motor, preferably, the power supply unit is a 48V power supply system, for example, a 48V lithium battery pack.

In order to satisfy the requirements on the overall strength of the forklift, preferably, the pallet fork mechanism comprises two parallel pallet fork bodies; the frame mechanism comprises an integrated support pipe which is disposed on a front side of the pallet fork mechanism and connected to the pallet fork mechanism; two legs of the support pipe are connected to outer portions of the pallet fork bodies, respectively; a rocker arm support for connecting the two pallet fork bodies and a support frame located in an upper portion of the rocker arm support are disposed on a front side of the support pipe; the rocker arm support and the support frame are fixed with the lower portion of the support pipe, respectively; the top cover is fixed between the support frame through a fixed column; and, the upper portion of the support pipe is extended forward and inclined, and fixed with the top cover and the upper portion of the fixed column.

Specifically, the support frame comprises side boxes disposed on left and right sides and a front baffle plate and a rear baffle plate disposed on front and rear sides of the support frame; the side boxes, the front baffle plate and the rear baffle plate are enclosed to form the insertion slot; a press plate for limiting the front-and-back movement of the power supply unit is further disposed on the rear baffle plate; and, an upper end of the press plate is an elastic clamp portion used for clamping the top surface of the power supply unit.

Preferably, side wheels for keeping the balanced movement of the forklift are disposed on both sides of the hub motor, respectively; and, the side wheels fix two sides of the wheel carrier for mounting the hub motor through a support seat, so that the forklift can be prevented from shaking or rolling over during the operation due to the offset of the center of gravity.

In order to ensure the compact layout and convenient maintenance, preferably, the controller is respectively detachably and electrically connected to the brake and the hub motor through a wiring box disposed on a side surface of the wheel carrier.

To be convenient for connection/disconnection and subsequent maintenance, preferably, a bus bundle is drawn from the controller, and a first connecting wire and a second connecting wire are drawn from the hub motor and the brake, respectively; and, within the wiring box, the bus bundle is detachably and electrically connected to the first connecting wire and the second connecting wire through a wiring screw and/or a quick connector.

Compared with the prior art, the present invention has the following advantages.
1. Since the driving mechanism is an integrated hub motor formed by integrating a driving motor, a tire and a hub, transmission accessories such as a reduction gearbox are further omitted, the overall mechanism is simple, and the components are closely fitted with each other, so that it is convenient for maintenance and the reliable operation of the whole equipment is ensured.
2. By the combination of the electromagnet with the thrust mechanism, compared with an existing hydraulic disc brake mechanism, the mechanism is simple and easily mounted. When traveling devices using the hub motor, for example, the forklift, generate a displacement, the electromagnet is controlled to adsorb the moving friction plate. At this time, there are gaps between the brake disc and the moving friction plate and between the brake disc and the fixed friction plate, respectively, and the forklift is traveling. When the forklift needs to be braked, the adsorption force of the electromagnet is removed. At this time, due to the push force of the second elastic member, the moving friction plate is moved outward and squeezes the brake disc, and the brake disc gradually realizes an braking effect due to the friction of the moving friction plate and the fixed friction plate and drives the driving wheel for braking, so that the braking effect is ideal and other traveling devices, for example, the forklift, are eventually braked.
3. By applying the lifting mechanism in the forklift, electrical lifting or manual lifting can be realized. The electrical lifting can preferably be purely electrical lifting or semi-automatic lifting, i.e., electrical lifting-up and manual lifting-down, so that the operation is reliable and it is highly universal. The present invention is applicable to electric forklifts, and the manual pump mechanism is also applicable to manual forklifts, so that the practicability is high, that is, the manual traveling and manual lifting can be realized. Particularly, the pump mechanism and the oil cylinder are an integrated piece and the pump mechanism together with the oil cylinder is mounted on the wheel carrier of the frame mechanism, so that the detachable mounting is realized, it is convenient for factories to reload lifting mechanism in different operation modes according to customer's demands, and it is convenient for production and manufacturing.
4. By integrally mounting the controller on the bottom of the insertion slot, the defect that the conventional controller is exposed outside and easily damaged by external objects is overcome, and the safety and reliability are improved. Moreover, in combination with the method for quickly exchanging the battery pack, it is convenient for daily maintenance and repair of the controller.
5. By using a single battery pack mechanism, the battery pack can be conveniently inserted into the insertion slot of the frame of the forklift or disassembled from the frame mechanism, and it is convenient to charge the disassembled battery pack. Moreover, when the battery level of the battery pack of the forklift is insufficient or exhausted, it can be replaced with another battery pack quickly, so that the high-efficiency operation requirement is met and the working efficiency is improved obviously.
6. Due to the arrangement of various battery pack limiting mechanisms within the insertion slot and in combination with the elastic clamp portion of the structurally simple and rational press plate, it is convenient for quickly replace, position and fix the battery pack.
7. The structural layout of the forklift is also simplified, the arrangements such as an external cover plate, a panel and a heat dissipation mechanism are reduced, and the corresponding insertion slot mechanism is optimized to adapt to the rod or hollow mechanism of the battery pack, so that the mechanism is simple, it is convenient for heat dissipation of the battery pack, the practicability is high and it is convenient for replacing the battery pack.
8. By using a 48V lithium battery pack, compared with the conventional batteries, the lithium battery is small in size and easy to carry and can provide a high voltage, the current of the system can be reduced, the service life of the components of the forklift can be prolonged, the driving torque of the forklift can be increased, the cost can be reduced, and the range of application is wide.
9. By using a wiring mechanism that is compact in overall layout, the bus bundle of the controller passes through the upper portion of the wheel carrier and is then detachably and electrically connected to the hub motor and the brake, respectively. Each wiring terminal is introduced into the wiring box arranged on a side of the wheel carrier and connected to a quick connector through a wiring screw. By such a wiring design, the length of the bus bundle and the connecting wires exposed outside can be reduced, and it is prevented from influencing the normal operation of the related components of the forklift. Moreover, during the subsequent maintenance, the maintenance of the corresponding components can be realized just by opening the wiring box and disconnecting the corresponding quick connector or wiring screw, without adjusting the wiring layout of the wheel carrier and without completely pulling out the bus bundle in the upper portion of the wheel carrier. Therefore, it is more convenient for maintenance, mounting and disassembly, and the practicability is high.

### Brief Description of the Drawings

Fig. 1 is a perspective view of a hub motor and a disc brake mechanism according to an embodiment of the present invention;
Fig. 2 is an exploded view of the hub motor according to the embodiment of the present invention;
Fig. 3 is a plan view of the hub motor of Fig. 2 in a direction of an end cover;
Fig. 4 is an exploded view of Fig. 1 on one side;
Fig. 5 is a sectional view of a brake of Fig. 4;
Fig. 6 is an exploded view of a forklift according to the embodiment of the present invention;
Fig. 7 is an exploded view of Fig. 6 in another direction;
Fig. 8 is a perspective view of an electric pump mechanism according to the embodiment of the present invention;
Fig. 9 is a perspective view of the electric pump mechanism in another direction according to the embodiment of the present invention;
Fig. 10 is a sectional view of an oil cylinder in the electric pump mechanism of Fig. 8 in a direction of A-A;
Fig. 11 is a top view of a partial mechanism of the electric pump mechanism according to the embodiment of the present invention;
Fig. 12 is a perspective view of a manual pump mechanism according to the embodiment of the present invention;
Fig. 13 is a sectional view of a pump cylinder in the manual pump mechanism of Fig. 12 in a direction of B-B,;
Fig. 14 is a top view of a partial mechanism of the manual pump mechanism according to the embodiment of the present invention;
Fig. 15 is a perspective view of a circuit in the wiring mechanism according to the embodiment of the present invention; and
Fig. 16 is a plan view showing the internal mechanism of a wiring box of Fig. 15.

### Detailed Description of the Preferred Embodiment

To enable a further understanding of the present invention content of the invention herein, refer to the detailed description of the invention and the accompanying drawings below:

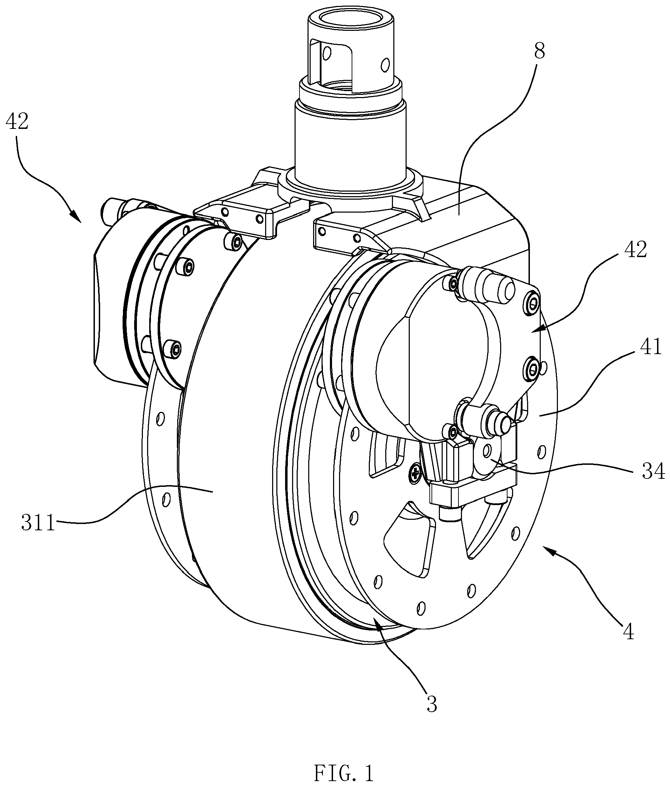

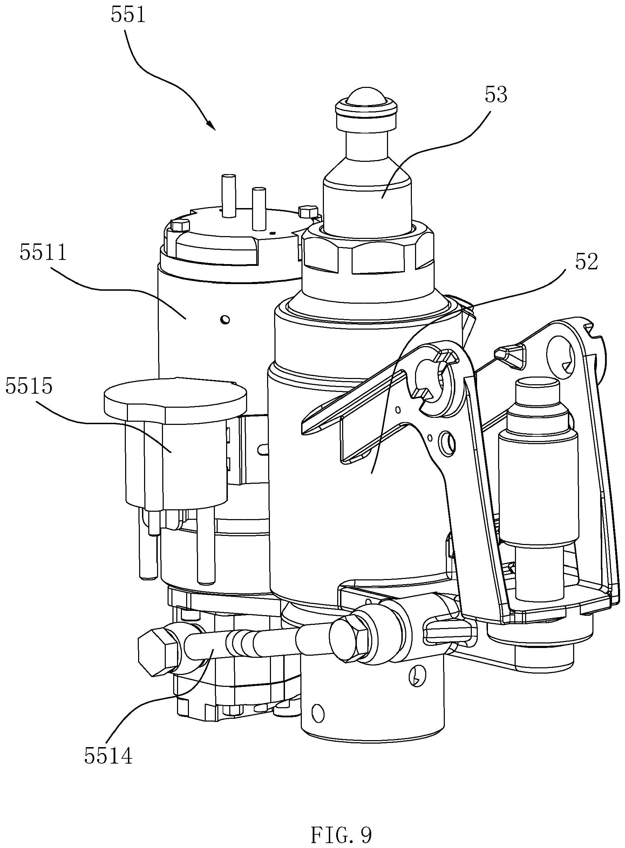

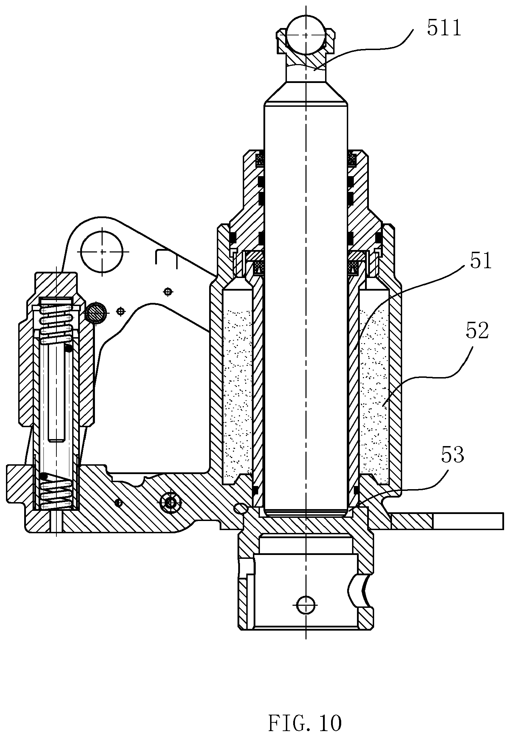

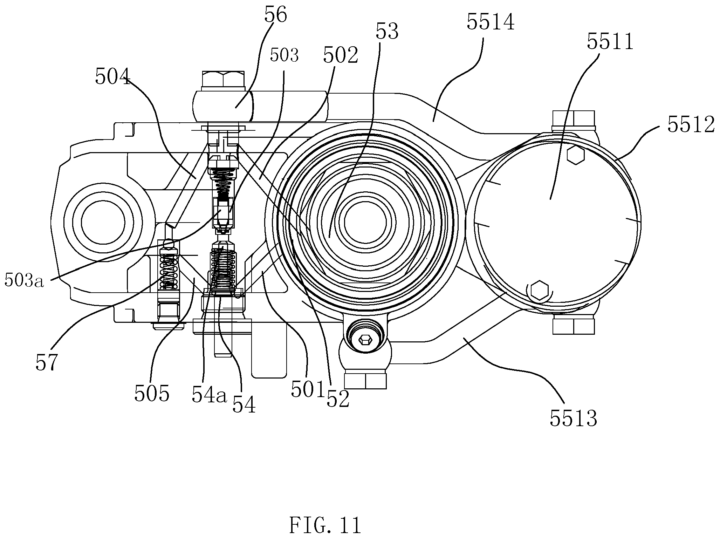

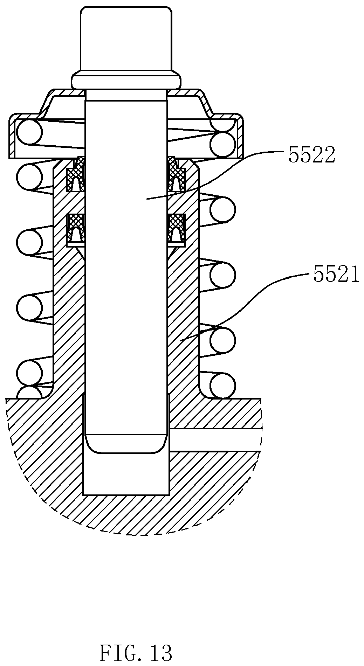

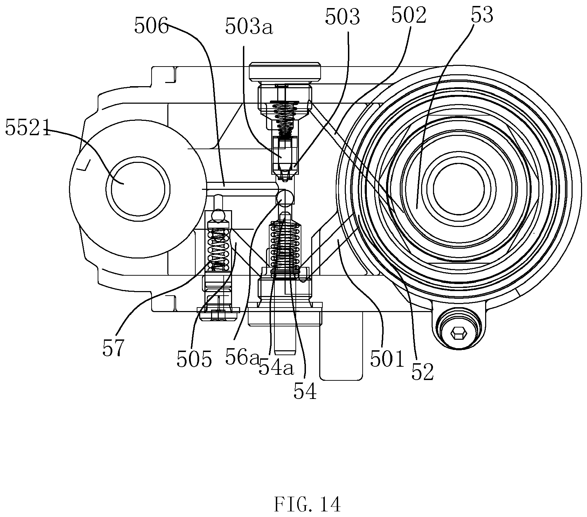

Figs. 1 to 16 show a preferred embodiment of the forklift of the present invention.

As shown in Figs. 1, 2, 6 and 7, the forklift comprises a frame mechanism 1, a pallet fork mechanism 2 disposed on the frame mechanism 1, a power supply unit 100, a driving mechanism, a brake mechanism, and a lifting mechanism 500 which is disposed on the frame mechanism 1 and controls the pallet fork mechanism 2 to move upward or downward. The driving mechanism is an integrated hub motor 3 which is rotatably disposed on the frame mechanism 1 and integrates a driving motor, a tire and a hub. The hub motor 3 comprises a rotor 31 and a connecting shaft 34 with two ends which is connected to the rotor 31 and can rotate relative to the rotor 31, each end of the connecting shaft 34 extends outside the rotor 31 and is connected (generally, detachably connected) to the frame mechanism 1. In addition, the hub motor 3 further comprises a stator 32 which is connected to the connecting shaft 34. Specifically, the connecting shaft 34 is penetrated through a middle part of the rotor 31 in an axial direction and fixedly mounted on a wheel carrier 8 of the frame mechanism 1. The rotor 31 is able to rotate about the connecting shaft 34, and a hub of the hub motor 3 is formed on a peripheral wall of the rotor 31.

The rotor 31 has a chamber 33. Magnetic members are distributed on an inner circumferential surface of the chamber, and both the connecting shaft 34 and the stator 32 are accommodated within the chamber 33. A bottom cover 312 is provided on one side of the rotor 31, while an end cover 313 adapted to the chamber 33 is disposed on the other side of the rotor 31. During driving, the rotor 31 can rotate in a circumferential direction, while the stator 32 is static and fixed relative to the frame mechanism 1, so that the travelling action of the forklift is realized.

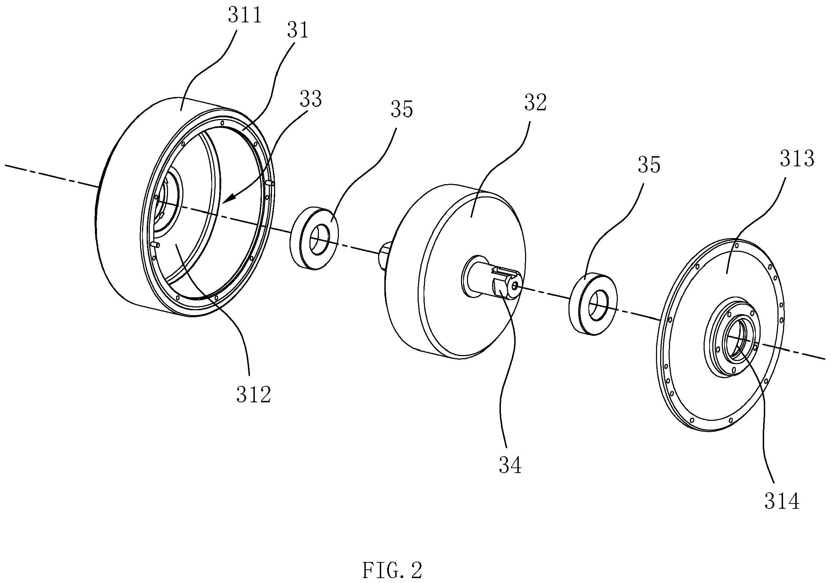

It can be known from Figs. 1 and Figs. 2 that, shaft holes 314 convenient for the rotation of the connecting shaft 34 relative to the rotor 31 are formed on both the end cover 313 and the bottom cover 312. A bearing 35 adapted to the shaft holes 314 is further sheathed on the connecting shaft 34. The stator 32 is connected with the frame mechanism 1 through the connecting shaft 34 and the stator 32 is rotatably connected within the chamber 33 relative to the rotor 31. A portion of the connecting shaft 34 is exposed outside the shaft holes 314 and can be mounted on the wheel carrier 8 of the frame mechanism 1. The end cover 313 is fixed on a side cover through a screw and occludes the chamber 33 of the rotor 31, so that the end cover 313, the stator 32 and the rotor 31 are assembled together to realize the driving effect of the hub motor 3. Moreover, the mechanism of the hub motor 3 is very simple and practical.

In this embodiment, a rubber layer 311 is coated on the peripheral wall of the rotor 31, and the rubber layer 311 forms a tire of the hub motor 3. The design of forming the tire by direct encapsulation is detachable and is characterized by compact mechanism and large bearing capacity. The bearing capacity of the hub motor 3 can be up to 1500 Kg.

In this embodiment, the rubber layer 311 coated on the hub motor 3 is a polyurethane rubber layer which has the characteristics of wear resistance, damping, noise reduction and the like, so that it is ensured that the hub motor 3 can satisfy the requirements on the service life of the motor and the wire in the actual application of the vehicle in a high-load operation environment. Moreover, the cost of directly coating the rubber layer 311 on the periphery of the rotor 31 is lower than the cost of separately providing a wheel, and it is more suitable for economical and small electric pallet trucks. Side wheels 7 for keeping the balanced movement of the forklift are disposed on both sides of the hub motor 3, respectively. The side wheels 7 are generally disposed on two sides of the wheel carrier 3 for mounting the hub motor 3. Specifically, the side wheels 7 are disposed on a support seat 85 arranged above the wheel carrier 8. The support seat 84 has legs which are located on two sides of the wheel carrier 8 and extends to the ground. The side wheels 7 are mounted at tail ends of the legs and come into contact with the ground to ensure the operation stability of the forklift.

In addition, it is to be noted that, the structural arrangement of the hub motor 3 in this embodiment is closely fitted with other components of the forklift, so that the center of gravity of the rear of the forklift as a whole is lower than the existing forklift mechanism having separate driving motor and traveling wheel. That is, the center of gravity of the rear of the forklift is moved down with respect to other forklifts, so that the forklift travels more stably, the operation reliability is improved obviously, and the production cost is reduced significantly.

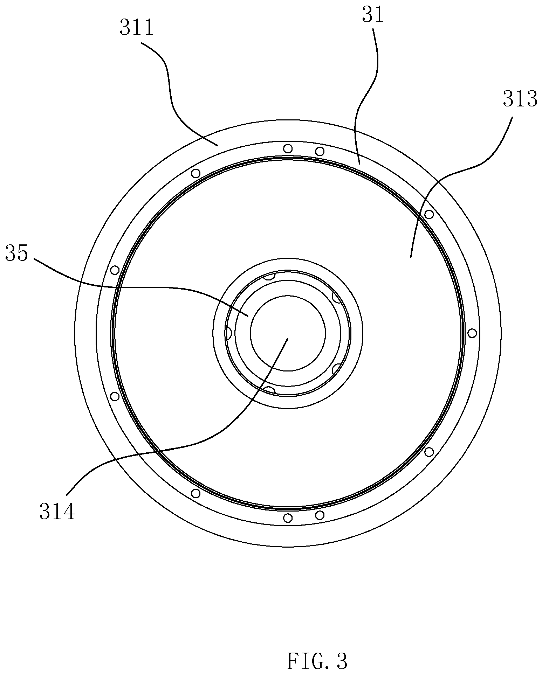

As shown in Fig. 3, the brake mechanism in this embodiment is a disc brake mechanism 4 disposed on one side or both sides of the hub motor 3. The disc brake mechanism 4 comprises a brake disc 41 and a brake 42. At least one brake 42 is correspondingly mounted on the brake disc 41. The brake 42 is an electromagnetic brake. In this embodiment, the disc brake mechanism 4 is designed for the special hub motor 3, and the conventional driving mechanism is a gear or chain transmission having a certain transmission ratio. After the electromagnetic brake 42 is powered off, the brake disc directly locks the motor shaft due to the elastic force. A larger braking force is achieved by amplifying the transmission ratio. In this embodiment, the hub motor 3 is simple in mechanism, and there is no gear and chain for providing the transmission ratio, so that the braking effect is improved by the double-brake mechanism.

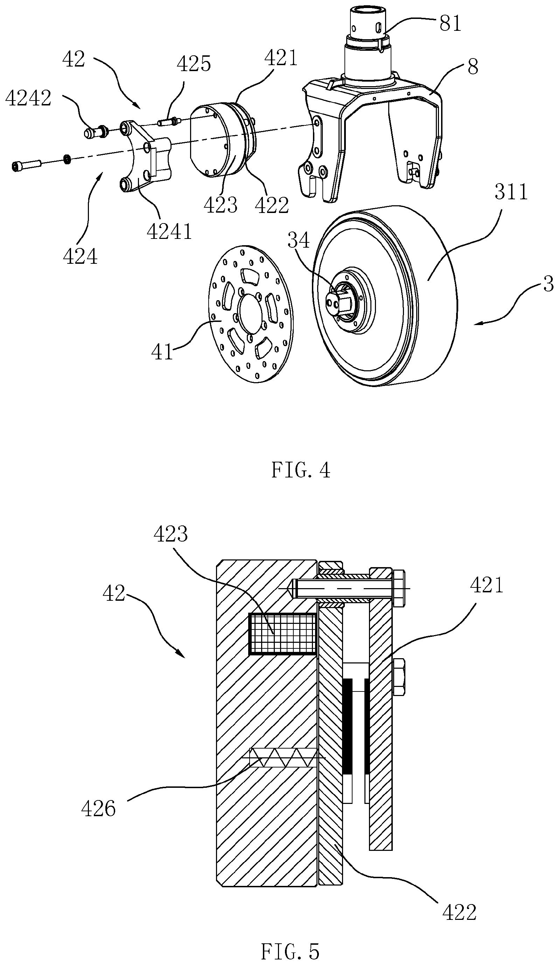

As shown in Figs. 4 and Figs. 5, the brake 42 in this embodiment comprises a fixed friction plate 421, a moving friction plate 422, an electromagnet 423 and a buffer portion 424. The fixed friction plate 421, the moving friction plate 422, the electromagnet 423 and the buffer portion 424 are successively disposed outward in an axial direction of the hub motor 3. The buffer portion 424 is fixed on the wheel carrier 8 via screws. An outer periphery of brake disc 41 is located between the fixed friction plate 421 and the moving friction plate 422. Generally, the brake disc 41 is connected to the rotor 31 of the hub motor 3. The buffer portion 424 comprises a buffer support 4241 and a first elastic member 4242. A mounting screw 425 successively passes through the first elastic member 4242 and the buffer support 4241 and fixes the buffer portion 424 on the electromagnet 423. The buffer portion 424 is fixed on the wheel carrier 8 of the frame mechanism 1 via screws. A second elastic member 426 is further disposed on the brake 42. Generally, the second elastic member 426 is a spring element embedded in an iron core spring hole of the electromagnet 423, so that the second elastic member 426 is resisted against a side surface of the moving friction plate 422 to keep the moving friction plate 422 in a trend of getting close to the fixed friction plate 421. In the braked state of the forklift, the second elastic member 426 tends to make the moving friction plate 422 close to the fixed friction plate 421 and compress the brake disc 41. The electromagnet 423 adsorbs the moving friction plate 422 in the driving state of the forklift so as to increase a gap between the fixed friction plate 421 and the moving friction plate 422 and smoothly rotate the brake disc 41.

During the displacement of the forklift, the electromagnet 423 is controlled to adsorb the moving friction plate 422, so that the second elastic member 426 between the electromagnet 423 and the moving friction plate 422 is compressed. At this time, the gap between the moving friction plate 422 and the fixed friction plate 421 becomes larger, the brake disc 41 is located in the gap between the moving friction plate 422 and the fixed friction plate 421 and will not come into contact with both the moving friction plate and the fixed friction plate, and the forklift is in the normal running state. When it is required to realize braking, the adsorption force of the electromagnet 423 is eliminated. At this time, due to the elastic resilience of the second elastic member 426, the moving friction plate 422 is close to the fixed friction plate 421, and the brake disc 41 in the gap is compressed on the fixed friction plate 421 under the squeezing of the moving friction plate 422 and gradually stopping rotating. Consequently, the hub motor 3 connected to the brake disc 41 is also braked, and the forklift is in the braked state.

During the braking, a stress is generated from the rigid squeezing of the brake 42. Due to this stress, it is possible that the friction plates of the brake 42 cannot better attach to the brake disc 41, so that the braking force is reduced and the safety risks are brought to the vehicle. The buffer portion 424 functions to form a buffer region between the electromagnet 423 and the buffer support 4241 and thus eliminate the stress generated from the rigid squeezing among the buffer support 4142, the electromagnet 423 and the wheel carrier 8 of the frame mechanism 1 by using the elastic force of the first elastic member 4242. Consequently, the safety and stability of the braking process are ensured, the braking effect is ideal, and the service life of the brake 42 can be prolonged.

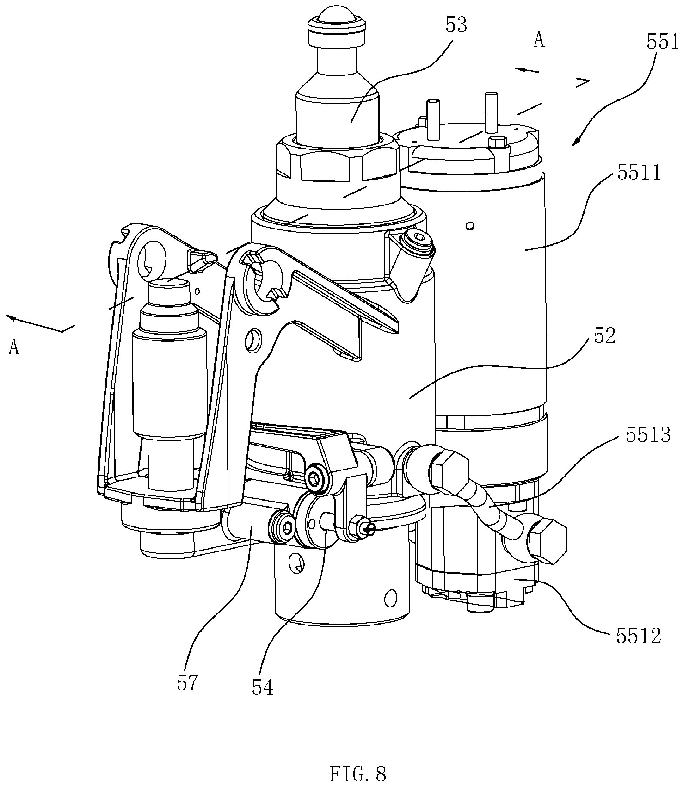

As shown in Figs. 8, Figs. 9, Figs. 11, Figs. 12 and Figs. 14, the lifting mechanism 500 comprises a pump mechanism, an oil cylinder 51 and an oil tank 52 disposed on a periphery of the oil cylinder 51. A plunger 511 for lifting the pallet fork mechanism 5 up or down is disposed in the oil cylinder 51. The oil cylinder 51 and the pump mechanism are assembled to form an integrated piece and are disposed on a mounting base 81 above the wheel carrier 8 in the frame mechanism 2. Generally, the oil cylinder and the pump mechanism are detachably disposed on the mounting base 81 above the wheel carrier 8 in the frame mechanism 2, so that it is convenient for replacement or maintenance. The top of the plunger 511 is inserted into a mounting hole on a top cover in the frame mechanism 1. The oil tank 52 is communicated with an oil return pipe 501, and a high-pressure chamber 53 is communicated with an oil inlet pipe 502. A communicating pipe 503 is connected between the oil return pipe 501 and the oil inlet pipe 502. A lowering valve set 54 for controlling the connection or disconnection of the oil return pipe 501 and the oil inlet pipe 502 and controlling the plunger to lift down is disposed on the communicating pipe 503. The lowering valve set 54 generally comprises a lowering valve and a speed limiting valve which are connected in series. The lowering valve is an electromagnet lowering valve for realizing electrical lifting. Of course, a manually-controlled lowering valve can also be used for realizing purely electrical lifting or semi-automatic lifting, i.e., electrical lifting-up and manual lifting-down. The lowering valve is selected as required, so that the operation is reliably and it is highly universal. When the pallet fork mechanism 2 is in an ascending state, the pump mechanism is able to eject the hydraulic oil in the oil tank 52 into the high-pressure chamber 53 so as to lift up the plunger 511; and, when the pallet fork mechanism 2 is in a descending state, after successively passing through the oil inlet pipe 502, the communicating pipe 503, the lowering valve set 54 and the oil return pipe 501, the hydraulic oil in the high-pressure chamber 53 flows back to the oil tank 52 to lift down the plunger 511.

In this embodiment, the pump mechanism can be an electric pump mechanism 511 and/or a manual pump mechanism 552.

As shown in Figs. 8, Figs. 9, Figs. 10 and Figs. 11, the electric pump mechanism 511 comprises a lifting motor 5511, a gear pump 5512 and a contactor 5515. The lifting motor 5511 is disposed on the gear pump 5512 and in driving connection to the gear pump 5512. The connector 5515 is electrically connected to the lifting motor 5511. The gear pump 5512 is communicated with the oil tank 52 through an oil suction pipe 5513. The gear pump 5512 is communicated with the high-pressure chamber 53 successively through an oil outlet pipe 5514 and the oil inlet pipe 502. A first one-way valve 56 for controlling the hydraulic oil in the oil outlet pipe 5514 to flow in a single direction from the oil tank 52 to the high-pressure chamber 53 is disposed at an outlet of the oil outlet pipe 5514. An overload protection pipe 504 is further communicated at the outlet of the oil outlet pipe 5514. The overload protection pipe 504 is communicated with an overload oil return pipe 505 through a safety valve, and the overload oil return pipe 505 is communicated with the oil return pipe 501 and then connected to the oil tank 52.

When a lifting switch of the forklift is triggered, the connector 5515 is powered on so that the lifting motor 5511 is powered on and rotated to drive the gear pump 5512 to operate. An oil suction port of the gear pump 5512 is communicated with the oil tank 52 outside the oil cylinder 51 through the oil suction pipe 5513, while the other end of the gear pump 5512 is communicated with the high-pressure chamber 53 in the oil cylinder 51 successively through the oil outlet pipe 5514, the first one-way valve 56 and the oil inlet pipe 502. At this time, the hydraulic oil in the oil tank 52 flows into the high-pressure chamber 53 successively through the oil suction pipe 5513, the gear pump 5512, the oil outlet pipe 5514 and the oil inlet pipe 502, so that a lifting-up action of the plunger 511 is completed. Since the first one-way valve 56 is arranged on the oil outlet pipe 5514, when the lifting motor 5511 stops operating, the first one-way valve 56 plays a role of sealing and stopping backflow, so that the oil in the high-pressure chamber 53 can be prevented from flowing back to the oil tank 52. During the descending operation, a lowering knob on an operating handle 11 is pulled to trigger the lowering valve set 54. An independent sealing valve rod 503a is disposed within the communicating pipe 503. Generally, the sealing valve rod 503a and the lowering valve set 54 are disposed in opposite to each other. The lowering valve set 54 is opened, and an ejector rod 54a in the lowering valve set 54 is moved to open the sealing valve rod 503a, so that the ejector 54a in the lowering valve set 54 can be resisted against the sealing valve rod 503a. At this time, the oil inlet pipe 502 is communicated with the oil return pipe 501, that is, the high-pressure chamber 53 is communicated with the oil tank 53, so that the pressure is balanced. Subsequently, due to the weight of the cargo or the weight of the frame mechanism 1, the hydraulic oil in the high-pressure chamber 53 flows back to the oil tank 52 successively through the oil inlet pipe 502, the communicating pipe 503, the sealing valve rod 503a, the lowering valve set 54 and the oil return pipe 501, so that a descending action is completed.

During the lifting-up process, when the cargo on the pallet fork mechanism 2 exceeds the maximum load of the vehicle, the hydraulic oil cannot enter the high-pressure chamber 53. In this case, the hydraulic oil guided by the gear pump 5512 opens the safety valve 57 through the overload protection pipe 504 and then flows back to the oil tank 52 through the overload oil return pipe 505 and the oil return pipe 501, so that the safety protection is realized.

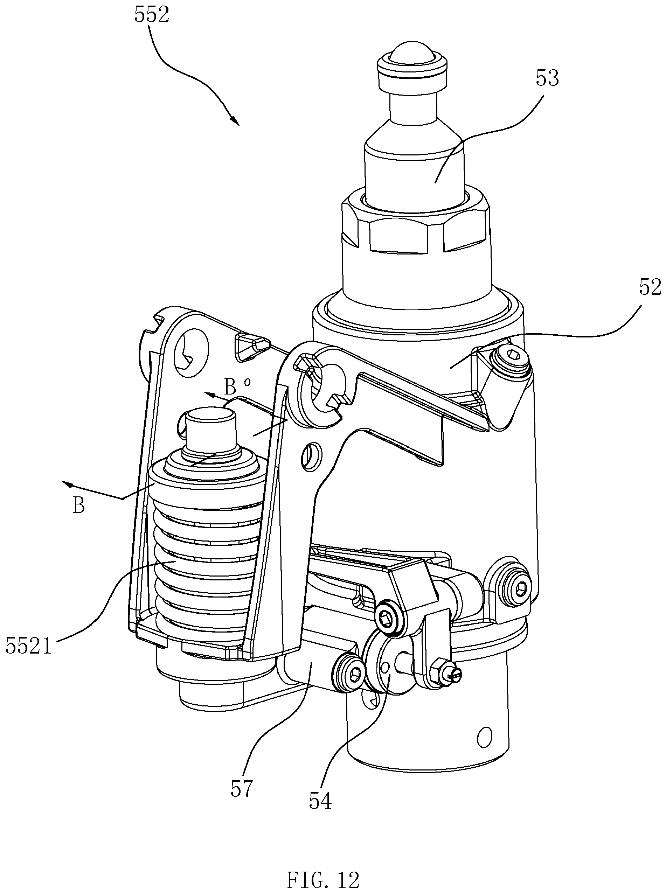

As shown in Fig. 12, Fig. 13 and Fig. 14, in this embodiment, the manual pump mechanism 552 is connected to the operating handle 11 disposed on the frame mechanism 1. Specifically, the manual pump mechanism 552 comprises a pump cylinder 5521 and a pump core 5522. The pump core 5522 is accommodated within the pump cylinder 5521 and does a reciprocating linear motion within the pump cylinder 5521. The pump cylinder 5521 is communicated with a middle section of the communicating pipe 503 through a manual oil inlet pipe 506. A second one-way valve 56a for controlling the hydraulic oil to flow to the high-pressure chamber 53 in a single direction through the oil return pipe 501 and the oil inlet pipe 502 is disposed at a junction of the communicating pipe 503 with the manual oil inlet pipe 506. The second one-way valve 56a is a one-way valve having a simple mechanism, like a steel ball. An independent sealing valve rod 503a is also disposed in the communicating pipe 503, and the sealing valve rod 503a and the lowering valve set 54 are disposed in opposite to each other, so that the ejector rod 54a in the lowering valve set 54 can be resisted against the sealing vale rod 503a via a steel ball. The pump cylinder 5521 is communicated with the oil tank 52 successively through the manual oil inlet pipe 506, the second one-way valve 56a, the communicating pipe 503, the lowering valve set 54 and the oil return pipe 501, and the pump cylinder 5521 is also communicated with the high-pressure chamber 53 successively through the manual oil inlet pipe 506, the communicating pipe 503, the sealing valve rod 503a and the oil inlet pipe 502, so that the function of manually pumping and compressing the oil is realized. The manual oil inlet pipe 506 is also communicated with the overload oil return pipe 505. A safety valve 57 is disposed between the manual oil inlet pipe 506 and the overload oil return pipe 505, and the overload oil return pipe 505 is connected to the oil tank 52 through the oil return pipe 501. Other mechanisms not described here are similar to those of the electric pump mechanism 551.

During the operation, the reciprocating motion of the pump core 552 within the pump cylinder 5521 of the manual pump set can be realized by shaking the operating handle 11 of the forklift up and down. When the pump core 5522 is retreated, the pressure within the pump cylinder 5521 is reduced. Due to the difference in pressure, the second one-way valve 56a is opened, and the hydraulic oil in the oil tank 52 flows into the pump cylinder 5521 successively through the oil return pipe 501, the communicating pipe 503 and the manual oil inlet pipe 506. When the pump core 5522 is pressed down, the pressure within the pump cylinder 5521 is increased. Due to the difference in reverse pressure, the second one-way valve 56a is closed again. At this time, the hydraulic oil in the pump cylinder 5521 flows into the high-pressure chamber 53 successively through the manual oil inlet pipe 506, the communicating pipe 503 and the oil inlet pipe 502 under the pressure, so that the lifting-up action of the plunger 511 is realized. During the descending operation, the lowering knob on the operating handle 11 is pulled to trigger the lowering valve set 54.The lowering valve set 54 is opened, and the ejector rod 54a in the lowering valve set 54 is moved to open the steel ball in the second one-way valve 56a and also open the sealing valve rod 503a. At this time, the oil inlet pipe 502 is communicated with the oil return pipe 501, that is, the high-pressure chamber 53 is communicated with the oil tank 53, so that the pressure is balanced. Subsequently, due to the weight of the cargo or the weight of the frame mechanism 1, the hydraulic oil in the high-pressure chamber 53 flows back to the oil tank 52 successively through the oil inlet pipe 502, the sealing valve rod 503a, the communicating pipe 503, the second one-way valve 56a, the lowering valve set 54 and the oil return pipe 501, so that the descending action is completed.

During the ascending process, when the cargo on the pallet fork mechanism 2 exceeds the maximum load of the vehicle, the hydraulic oil cannot enter the high-pressure chamber 53, and the manual pump pumps out the hydraulic oil from the oil tank 52 through the manual oil inlet pipe 506, the second one-way valve 56a, the communicating pipe 503, the lowering valve set 54 and the oil return pipe 501. Therefore, due to the pressure, the overload hydraulic oil will push and open the safety valve 57, then flow into the overload oil return pipe 505 through the manual oil inlet pipe 506 and finally flow back to the oil tank 52 through the oil return pipe 501, so that the hydraulic oil can circulate and flow only in the oil tank 52 and the safety protection is thus realized.

In this embodiment, the oil cylinder 51 and the pump mechanism (e.g., the electric pump mechanism 551 and the manual pump mechanism 552) can be manufactured into an integrated assembly, so that it is convenient for mounting. The electric pump mechanism 551 is disposed on the rear side of the oil cylinder 51, the manual pump mechanism 552 is disposed on the front side of the oil cylinder 51, and the pump mechanism together with the oil cylinder 51 is detachably mounted on the mounting base 81 above the wheel carrier 8 in the frame mechanism 1. For example, a mounting hole is formed in the lower portion of the oil cylinder 51, and the lower portion of the oil cylinder 51 is inserted into the mounting base 81 and fixed by a bolt. In this way, it is convenient for factories to change pump mechanisms in different forms according to the consumer's demands.

In this way, the lifting mechanism 500 integrates the electrical lifting and the manual lifting, the switchover between the manual state and the automatic state of the lifting mechanism 500 is realized by assembling a manual or electric pump mechanism. An operator can select the pump mechanism as required, and it is very convenient.

Of course, the pump mechanism can also be only the electric pump mechanism 551. The oil cylinder 51 and the electric pump mechanism 551 are manufactured into an integrated assembly which is then mounted on the mounting base 81 above the wheel carrier 8 in the frame mechanism 1.

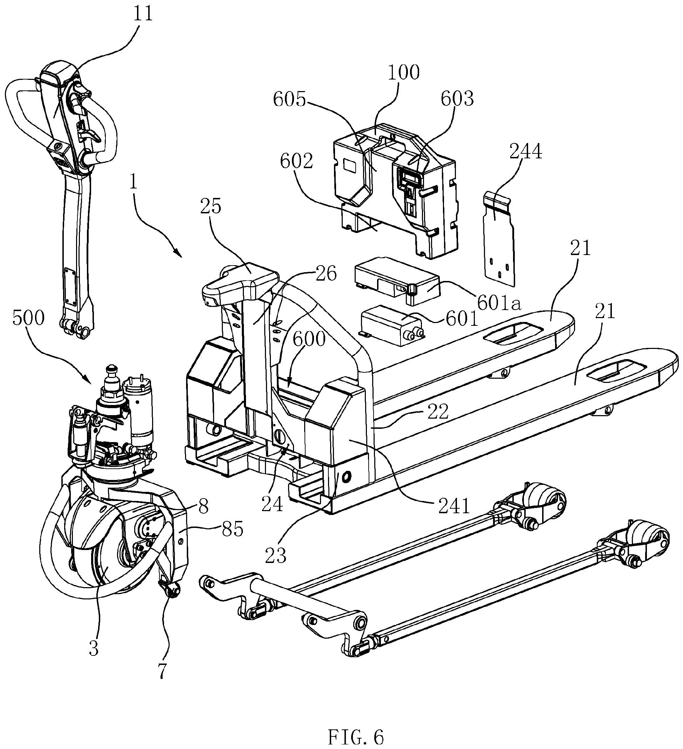

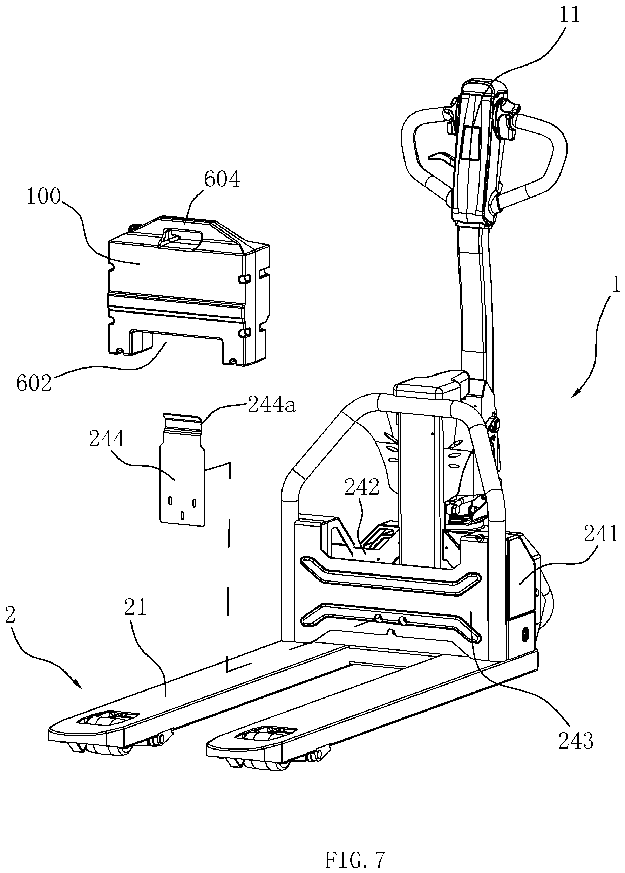

As shown in Figs. 6 and Figs. 7, an insertion slot 600 is formed on the frame mechanism 1, a controller 601 is disposed on the bottom of the insertion slot 600, and the power supply unit 100 is detachably inserted into the insertion slot 600 and electrically connected to the hub motor 3, the lifting motor 5511, the electromagnet 412, the controller 601 and other components, respectively. In this embodiment, the power supply unit 100 is a 48V lithium battery pack. Compared with the conventional batteries, the lithium battery is small in size and easy to carry and can provide a high voltage. The detachable design for the battery pack is very convenient for charging. When a forklift is to be used for a long period of time, it is only required to prepare multiple battery packs for alternate use. The detachable design also provides convenience for this usage mode.

As shown in Fig. 6, in this embodiment, the pallet fork mechanism 2 comprises two parallel pallet fork bodies 21. The frame mechanism 1 comprises an integrated support pipe 22 which is disposed on a front side of the pallet fork mechanism 2 and connected to the pallet fork mechanism 2. The support pipe 22 is an integrated pipe having an inverted U-shaped main body. Two legs of the support pipe 22 are connected to outer portions of the pallet fork bodies 21, respectively. A rocker arm support 23 for connecting the two pallet fork bodies 21 and a support frame 24 located in an upper portion of the rocker arm support 23 are disposed on a front side of the support pipe 22. The rocker arm support 23 and the support frame 24 are fixed with the lower portion of the support pipe 22, respectively. A top cover 25 is fixed between the support frame 24 through a fixed column 26. The upper portion of the support pipe 22 is extended forward and inclined, and welded with the top cover 25 and the upper portion of the fixed column 26. The support frame 24 comprises side boxes 241 disposed on left and right sides and a front baffle plate 242 and a rear baffle plate 243 disposed on front and rear sides of the support frame 24. The side boxes 241, the front baffle plate 242 and the rear baffle plate 243 are enclosed to form the insertion slot 600. A press plate 244 for limiting the front-and-back movement of the power supply unit 100 is further disposed on the rear baffle plate 243. An upper end of the press plate 244 is an elastic clamp portion 244a used for clamping the top surface of the power supply unit 100. The elastic clamp portion 244a is an arc-shaped boss. Since the two legs of the support pipe 22 are connected to the pallet fork bodies 21, respectively, the weight of the support member mechanism is relieved, and the strength of the support member mechanism is also ensured. Meanwhile, since the side boxes 241, the front baffle plate 242 and the rear baffle plate 243 are enclosed to form the insertion slot 600, by cooperating with the support pipe 22, the overall strength is improved, and the lithium battery can be accommodated; moreover, the layout of the frame mechanism 1 is simplified, and the arrangement of an external cover plate, a panel and a heat dissipation mechanism is reduced.

In this embodiment, a housing 601a is disposed outside the controller 601. The controller 601 is fixedly limited on the bottom of the insertion slot 600 through the housing 601a. Generally, for maintenance convenience of the controller, the controller 601 is detachably disposed on the bottom of the insertion slot 600 through the housing 601a. This detachable fixation can be fixing via screws. A limiting gap 602 adapted to the housing 601a and used for limiting the left-and-right movement of the power supply unit 100 is formed on a bottom shell of the power supply unit 100. A limiting groove 605 in limiting cooperation with the fixed column 26 is disposed in the front of the shell of the power supply unit 100, and a limiting mechanism can also be disposed on another side wall of the insertion slot 600. In this way, it is ensured that the power supply unit 100 will not shake in each direction or even be powered off due to the traveling of the forklift after the power supply unit 10 is inserted into the insertion slot 600. A plug 603 convenient for wiring is further disposed in the rear of the shell of the power supply unit 100, and a handle 604 for ease of operation by an operator is disposed on the top surface.

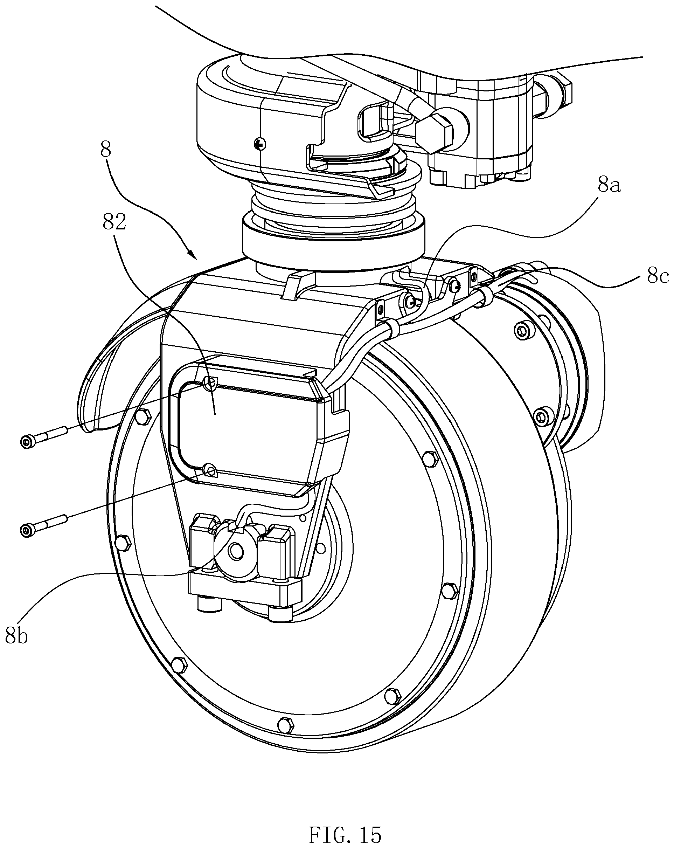

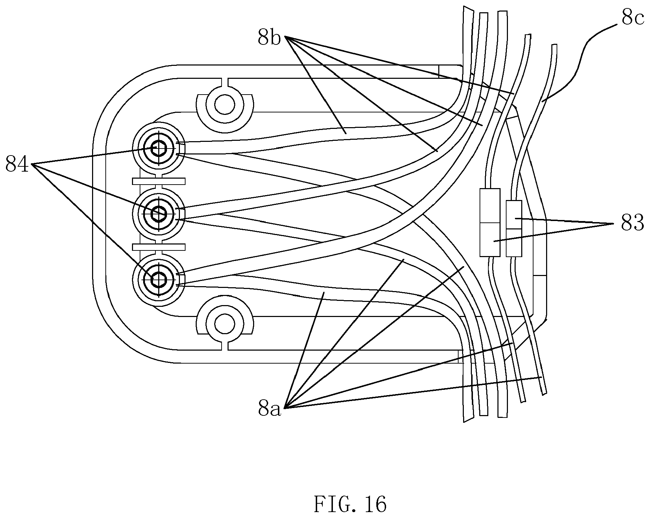

As shown in Figs. 15 and Figs. 16, the housing 601a is detachably connected to the brake 42 and the hub motor 3 via a wiring box 82, respectively. The wiring box 82 is disposed on an outer side surface of the wheel carrier 8, and a box cover is disposed on a surface of the wiring box 82 via screws. A first connecting wire 8b and a second connecting wire 8c are drawn from the hub motor 3 and the brake 42, respectively. The first connecting wire 8b and the second connecting wire 8c are converged within the wiring box 82 and connected to the controller 601 via a bus bundle 8a. The bus bundle 8a drawn from the controller 601a through the housing 601a comprises five branch wires. Four branch wires are connected to the first connecting wire 8b of the hub motor 3, and the fifth branch wire is connected to the second connecting wire 8c of the brake 42. Among the four branch wires connected to the hub motor 3, three branch wires are connected to phase wires of the hub motor 3, while the other one wire is connected to a connecting wire of a Hall sensor of the hub motor 3. In this embodiment, the three phase wires of the hub motor 3 and the three branch wires drawn from the bus bundle 8a are connected to three wiring columns in the wiring box 82, respectively, and are fixedly connected via wiring screws 84, so that the three phase wires of the hub motor 3 are detachably connected to the three branch wires of the bus bundle 8a.

In addition, the second connecting wire 8c of the brake 42 and the connecting wire of the Hall sensor are connected to quick connectors 83, respectively. Correspondingly, the other two branch wires of the bus bundle 8a are also connected to suited quick connectors 83. In this way, the other two branch wires of the bus bundle 8a can be electrically connected to the second connecting wire 8c and the connecting wire of the Hall sensor quickly and detachably. However, it is not limited to this connection way. The quick connection can also be realized by magnetism, buckles or in other ways. In the practical application, the quick connection way can be properly selected according to the internal space of the wiring box 8. By this detachable electrical connection mechanism, the wiring design can reduce the length of the bus bundle and the connecting wires exposed outside, and it is prevented from influencing the normal operation of the related components of the forklift. Moreover, during the subsequent maintenance, the maintenance of the corresponding components can be realized just by opening the wiring box 82 and disconnecting the corresponding quick connector 83 or wiring screw 84, without adjusting the wiring layout of the wheel carrier 8 and without completely pulling out the bus bundle 8a in the upper portion of the wheel carrier 8. Therefore, it is more convenient for maintenance, mounting and disassembly, and the practicability is high.

## Claims

1. A forklift, comprising:
a frame mechanism (1);
a pallet fork mechanism (2) disposed on the frame mechanism (1);
a power supply unit (100);
a driving mechanism;
a brake mechanism; and
a lifting mechanism (500) which is disposed on the frame mechanism (1) and controls the pallet fork mechanism (2) to move upward or downward;
**characterized in that**
the driving mechanism is an integrated hub motor (3) which is rotatably disposed on the frame mechanism (1) and integrates a driving motor, a tire and a hub;
the hub motor (3) comprises a rotor (31) and a connecting shaft (34) with two ends which is connected to the rotor (31) and can rotate relative to the rotor (31), each end of the connecting shaft (34) extends outside the rotor (31) and is connected to the frame mechanism (1).

2. The forklift according to claim 1,
**characterized in that**
the hub motor (3) further comprises a stator (32), which is connected to the connecting shaft (34);
the connecting shaft (34) is penetrated through a middle part of the rotor (31) in an axial direction and fixedly mounted on a wheel carrier (8) of the frame mechanism (1);
the rotor (31) is able to rotate about the connecting shaft (34); and
a hub of the hub motor (3) is formed on a peripheral wall of the rotor (31).

3. The forklift according to claim 2,
**characterized in that**
the rotor (31) has a chamber (33) within which both the connecting shaft (34) and the stator (32) are accommodated; and
a bottom cover (312) is provided on one side of the rotor, while an end cover (313) adapted to the chamber (33) is disposed on the other side of the rotor (31)..

4. The forklift according to claim 3,
**characterized in that**
shaft holes (314) convenient for the rotation of the connecting shaft (34) are formed on both the end cover (313) and the bottom cover (312), and a bearing (35) adapted to the shaft holes (314) is further sheathed on the connecting shaft (34).

5. The forklift according to claim 2,
**characterized in that**
a rubber layer (311) is coated on the peripheral wall of the rotor (31), and the rubber layer (311) forms a tire for the hub motor (3).

6. The forklift according to claim 1,
**characterized in that**
the brake mechanism is a disc brake mechanism (4) disposed on the hub motor (3), the disc brake mechanism (4) comprises a brake disc (41) and a brake (42), and at least one brake (42) is correspondingly mounted on the brake disc (41).

7. The forklift according to claim 6,
**characterized in that**
the disc brake mechanism (4) is disposed on one side or both sides of the hub motor (3).

8. The forklift according to claim 6,
**characterized in that**
the brake (42) comprises a fixed friction plate (421), a moving friction plate (422), an electromagnet (423) and a buffer portion (424);
the fixed friction plate (421), the moving friction plate (422), the electromagnet (423) and the buffer portion (424) are successively disposed outward in an axial direction of the hub motor (3); and
an outer periphery of the brake disc (41) is located between the fixed friction plate (421) and the moving friction plate (422).

9. The forklift according to claim 8,
**characterized in that**
the buffer portion (424) comprises a buffer support (4241) and a first elastic member (4242);
a mounting screw (425) successively passes through the first elastic member (4242) and the buffer support (4241) and fixes the buffer portion (424) on the electromagnet (423);
the buffer portion (424) is fixed on the wheel carrier (8) of the frame mechanism (1) via screws.

10. The forklift according to claim 9,
**characterized in that**
a second elastic member (426) is further disposed on the brake (42), and in the braked state of the forklift, the second elastic member (426) tends to make the moving friction plate (422) close to the fixed friction plate (421) and compress the brake disc (41); and
the electromagnet (426) adsorbs the moving friction plate (422) in the driving state of the forklift so as to increase a gap between the fixed friction plate (421) and the moving friction plate (422) and rotate the brake disc (41).

11. The forklift according to claim 1,
**characterized in that**
the lifting mechanism (500) comprises a pump mechanism, an oil cylinder (51) and an oil tank (52) disposed on a periphery of the oil cylinder (51);
a plunger (511) for lifting the pallet fork mechanism (2) up or down is disposed in the oil cylinder (51);
the oil cylinder (51) and the pump mechanism are assembled to form an integrated piece and are detachably disposed on a mounting base (81) above the wheel carrier (8) in the frame mechanism (1);
the top of the plunger (511) is inserted into a mounting hole on a top cover in the frame mechanism (1);
the oil tank (52) is communicated with an oil return pipe (501), and a high-pressure chamber (53) is communicated with an oil inlet pipe (502);
a first one-way valve (56) for allowing hydraulic oil to flow in a single direction from the oil tank (52) to the high-pressure chamber (53) is disposed on a pipe in front of the high-pressure chamber (53);
a communicating pipe (503) is connected between the oil return pipe (501) and the oil inlet pipe (502);
a lowering valve set (54) for controlling the connection or disconnection of the oil return pipe (501) and the oil inlet pipe (502) is disposed on the communicating pipe (503), and a sealing valve rod (503a) is further disposed within the communication pipe (503);
when the pallet fork mechanism (2) of the forklift is in an ascending state, the pump mechanism is able to eject the hydraulic oil in the oil tank into the high-pressure chamber (53) so as to lift up the plunger (511); and
when the pallet fork mechanism (2) of the forklift is in a descending state, the lowering valve set (54) is cooperated with the sealing valve rod (503a) to communicate the oil return pipe (501) with the oil inlet pipe (502) so that the hydraulic oil in the high-pressure chamber (53) flows back to the oil tank (52) so as to lift down the plunger (511).

12. The forklift according to claim 11,
**characterized in that**
the sealing valve rod (503a) and the lowering valve set (54) are disposed in opposite to each other, and an ejector rod (54a) in the lowering valve set (54) is resisted against and cooperated with the sealing valve rod (503a), so that the lowering valve set (54) and the sealing valve rod (503a) are opened simultaneously to complete a descending action of the pallet fork mechanism (2).

13. The forklift according to claim 11,
**characterized in that**
the pump mechanism is an electric pump mechanism (551) and/or a manual pump mechanism (552).

14. The forklift according to claim 13,
**characterized in that**
the pump mechanism is an electric pump mechanism (551), and the electric pump mechanism (551) comprises a lifting motor (5511), a gear pump (5512) and a contactor (5515);
the lifting motor (5511) is disposed on the gear pump (5512) and in driving connection to the gear pump (5512);
the contactor (5515) is electrically connected to the lifting motor (5511); and
the gear pump (5512) is communicated with the oil tank (52) through an oil suction pipe (5513), and the gear pump (5512) is communicated with the high-pressure chamber (53) successively through an oil outlet pipe (5514) and the oil inlet pipe (502); and, the first one-way valve (56) is disposed on the oil outlet pipe (5514).

15. The forklift according to claim 14,
**characterized in that**
an overload protection pipe (504) is further communicated at an outlet of the oil outlet pipe (5514);
the overload protection pipe (504) is communicated with an overload oil return pipe (505) through a safety valve (57); and
the overload oil return pipe (504) is communicated with the oil return pipe (501) so as to connect the oil tank (52).

16. The forklift according to claim 11,
**characterized in that**
the pump mechanism is a manual pump mechanism (552), and the manual pump mechanism (552) comprises a pump cylinder (5521) and a pump core (5522);
the pump core (5522) is accommodated within the pump cylinder (5521) and does a reciprocating linear motion within the pump cylinder (5521);
the pump cylinder (5521) is communicated with a middle section of the communicating pipe (503) through a manual oil inlet pipe (506);
a second one-way valve (56a) for controlling the hydraulic oil to flow to the high-pressure chamber (53) in a single direction through the oil return pipe (501) and the oil inlet pipe (502) is disposed at a junction of the communicating pipe (503) with the manual oil inlet pipe (506); and
the pump cylinder (5521) is communicated with the oil tank (52) successively through the manual oil inlet pipe (506), the second one-way valve (56a), the communicating pipe (503), the lowering valve set (54) and the oil return pipe (501), and the pump cylinder (5521) is also communicated with the high-pressure chamber (53) successively through the manual oil inlet pipe (506), the communicating pipe (503), the first one-way valve (56) and the oil inlet pipe (502), so as to realize an oil suction and compression function.

17. The forklift according to claim 16,
**characterized in that**
the manual oil inlet pipe (506) is also communicated with the overload oil return pipe (505), a safety valve (57) is disposed between the manual oil inlet pipe (506) and the overload oil return pipe (505), and the overload oil return pipe (505) is connected to the oil tank (52) through the oil return pipe (501).

18. The forklift of anyone according to claim 1-17,
**characterized in that**
an insertion slot (600) is formed on the frame mechanism (1), a controller (601) is disposed on the bottom of the insertion slot (600), and the power supply unit (100) is detachably inserted into the insertion slot (600) and electrically connected to the hub motor (3) and the controller (601), respectively.

19. The forklift according to claim 18,
**characterized in that**
the controller (601) is disposed on the bottom of the insertion slot (600) through a housing (601a) adapted to the controller (601);
a limiting gap (602) adapted to the housing (601a) and used for limiting the left-and-right movement of the power supply unit (100) is formed on a shell of the power supply unit (100);
a plug (603) convenient for wiring is further disposed on the shell of the power supply unit (100); and
a handle (604) for ease of operation by an operator is disposed on a top surface of the shell of the power supply unit (100).

20. The forklift according to claim 20,
**characterized in that**
the power supply unit (100) is a 48 V power supply system.

21. The forklift according to claim 1,
**characterized in that**
the pallet fork mechanism (2) comprises two parallel pallet fork bodies (21);
the frame mechanism (1) comprises an integrated support pipe (22) which is disposed on a front side of the pallet fork mechanism (2) and connected to the pallet fork mechanism (2);
two legs of the support pipe (22) are connected to outer portions of the pallet fork bodies (21), respectively;
a rocker arm support (23) for connecting the two pallet fork bodies (21) and a support frame (24) located in an upper portion of the rocker arm support (23) are disposed on a front side of the support pipe (22);
the rocker arm support (23) and the support frame (24) are fixed with the lower portion of the support pipe (22), respectively;
the top cover (25) is fixed between the support frame (24) through a fixed column (26); and
the upper portion of the support pipe (22) is extended forward and inclined, and fixed with the top cover (25) and the upper portion of the fixed column (26).

22. The forklift according to claim 21,
**characterized in that**
the support frame (24) comprises two side boxes (24) disposed on left and right sides and a front baffle plate (242) and a rear baffle plate (243) disposed on front and rear sides of the support frame (24);
the side boxes (24), the front baffle plate (242) and the rear baffle plate (243) are enclosed to form the insertion slot (600); a press plate (244) for limiting the front-and-back movement of the power supply unit (100) is further disposed on the rear baffle plate (243); and
an upper end of the press plate (244) is an elastic clamp portion (244a) used for clamping the top surface of the power supply unit (100).

23. The forklift according to claim 1,
**characterized in that**
side wheels (7) for keeping the balanced movement of the forklift are disposed on both sides of the hub motor (3), respectively; and
the side wheels (7) fix two sides of the wheel carrier (8) for mounting the hub motor (3) through a support seat (85).

24. The forklift according to claim 19,
**characterized in that**
the controller (601) is respectively detachably and electrically connected to the brake (42) and the hub motor (3) through a wiring box (82) disposed on a side surface of the wheel carrier (8).

25. The forklift according to claim 24,
**characterized in that**
a bus bundle (8a) is drawn from the controller (601) through the housing (601a), and a first connecting wire (8b) and a second connecting wire (8c) are drawn from the hub motor (3) and the brake (42), respectively; and
within the wiring box (82), the bus bundle (8a) is detachably and electrically connected to the first connecting wire (8b) and the second connecting wire (8c) through a wiring screw (84) and/or a quick connector (83).
